# EUROPEAN PATENT APPLICATION

(11) **EP 2 369 382 A1**
(43) Date of publication of application: **28.09.2011**
(21) Application number: 11002294.4
(22) Date of filing: 21.03.2011
(51) Int. Cl.: G02B 6/06, G02B 13/06

(54) **Rigid multi-directional imaging bundle and imaging assembly incorporating the same**

(30) Priority: 22.03.2010 US 340732 P; 18.02.2011 US 932219
(71) Applicant: Schott Corporation, Elmsford, New York 10523 (US)
(72) Inventor: Tabor, Kevin, Webster Massachusetts 01570 (US); Raszka, Scott A., Woodstock Connecticut 06281 (US); Highbarger, Kerry, Southbridge Massachusetts 01550 (US)
(74) Representative: Herden, Andreas F.

(57) **Abstract**

A multi-directional imaging assembly includes a multi-directional imaging bundle having at least two rigid image-conducting branch elements (120A,120B). Each branch element has opposed image-input (132) and image-output faces (142) and at least one bend (145) between the faces. The branch elements are mutually bound such that the image-input faces are disparately directed and the image-output faces coincide to define a common image-output face (105). Optically aligned with each image-input face is a focusing element (160A,160B) that defines a field of view correlating to a spatial region. An image of the spatial region correlating to the field of view defined by a focusing element is acquired and projected onto the image-input face with which that focusing element is optically aligned. Images conducted through the branch elements, and outputted through the common image-output face, are optically communicated to an image detector array (110). The image detector array is communicatively linked to a data processing system including image-enhancing algorithms that eliminate redundant content among plural images in order to create a composite image that simulates a single, large-field-of-view image.

## Description

### Background

The design and fabrication of imaging systems or "imagers" (e.g., cameras) incorporating image detector arrays such as charge-coupled devices (CCDs) and complimentary metal-oxide semiconductor (CMOS) circuits is an established art. Such detector arrays are typically formed on a planar substrate and are, therefore, frequently referred to as "focal plane arrays." Depending on the particular application for which an imager is designed, different optical components are implemented to optically communicate images to the image detector array. For example, in a simple consumer digital video or still-image camera, at least one lens is situated forward of the focal plane array for projecting images of scenes being filmed onto the image detector array. In such a case, the at least one lens defines an optical axis that is oriented orthogonally to the plane defined by the focal plane array.

In creating imagers for more complex applications, such as video surveillance, imaging-system designers are confronted with the task of communicating "wide-angle" or "panoramic" images to a single focal plane array. Beyond certain limits, the use of a single wide-angle lens results in unacceptable image distortion. In recognition of the image distortion introduced by large-field-of-view lenses, attempts have been made to assemble imaging systems with multiple, disparately-directed lenses, the individual images from which are then focused onto one or more detector arrays, digitized and "combined" by techniques such as algorithmic "correction" and pixel matching. The goal of such devices is to create a corrected image that is a digitized representation of a continuous region of space representing a large field of view with reduced distortion.

The use of multiple disparately-directed lenses combined with algorithmic correction presents its own set of challenges. According to one approach, undistorted images can be captured and stored in computer memory if multiple focal plane arrays are used. In such a case, each lens is optically aligned with its own focal plane array. However, such an implementation introduces the complexities of communicating to computer memory, synchronizing and algorithmically analyzing the signal outputs of multiple focal plane arrays. Moreover, electronically packaging multiple disparately angled focal plane arrays invites a host of challenges, not the least of which is spatial efficiency. In a second approach, multiple disparately oriented lenses are used to simultaneously project a corresponding number of images onto a single focal plane array. A particular implementation is represented by the so-called "bug eye" by BAE Systems. In the "bug eye" system, several - specifically nine (9) - lenses are arranged on a hemispherical surface. A faceted fused optical fiber bundle is interposed between the lenses and the focal plane array in order to compensate for extreme non-perpendicularity between the focal plane array and peripheral lenses. One image is projected from each of the nine lenses onto a corresponding facet of the fused bundle and then conveyed by internal reflection to a corresponding image-detecting portion of the focal plane array. While the "bug eye" obviates the issues associated with the use of multiple disparately angled focal plane arrays, only one of the nine lenses defines an optical axis that is oriented orthogonally to the focal plane array and/or a central facet of the faceted bundle. Each of the other eight lenses defines an optical axis that is oriented at an angle of substantially less than 90° relative to the focal plane array and to the facet with which that lens is aligned. Consequently, although the image axis defined by each of the "non-orthogonal" lenses is within the acceptance angle of the fiber ends defining a corresponding bundle facet, and none of the nine lenses individually is sufficiently "wide-angled" to introduce appreciable distortion, there is nevertheless substantial image distortion associated with each of the "non-orthogonal" lenses by virtue of the fact that the optical axis associated with each such lens is oriented at a shallow angle with respect to its corresponding bundle facet.

In recognition of the need to contemporaneously deliver multiple undistorted images to a single focal plane array, one prior design employs flexible image guides. More specifically, the "Poly Optical Fiber Device" introduced by Volpi Manufacturing USA (hereinafter, "Volpi") allows up to eight (8) different views to be conveyed simultaneously to a single camera through flexible coherent fiber-optic imaging guides. In associated product literature, Volpi emphasizes the flexibility of each "fiber leg," and how that flexibility facilitates the reorientation of legs relative to one another. The flexibility of individual imaging guides is undoubtedly an advantage in some applications. However, if a device such as Volpi's Poly Optical Fiber device is to be employed under conditions requiring fixed imaging angles, then an "exoskeletal" structure or framework is required in order to retain each leg in a fixed position and angular orientation.

Accordingly, there exists a need for a self-supporting multi-directional imaging assembly that contemporaneously communicates multiple minimally-distorted images to a single planar detector array.

### Summary

A central component of an illustratively embodied multi-directional imaging assembly is a multi-directional imaging bundle. In one embodiment, a multi-directional imaging bundle has a plurality of at least two image-conducting branch elements. Each branch element has an imaging-conducting first portion with an image-input face and an image-conducting second portion with an image-output face opposite the image-input face. Moreover, each branch element is rigid over its entire length between the opposed image-input and image-output faces and includes at least one bend between the first and second portions such that the first and second portions extend along, respectively, a first image-propagation axis and second image-propagation axis that is non-parallel to the first image-propagation axis.

A multi-directional imaging bundle is formed by mutually binding the second portions of at least first and second image-conducting branch elements. In alternative illustrative versions, mechanical binding of the branch elements is accomplished by at least one of (i) heat fusing and (ii) application of an adhesive, such as an epoxy, by way of non-limiting example. The mutually bound second portions define a bundle trunk and extend along, though not necessarily parallel to, a common bundle axis. Furthermore, the image-output faces of the branch elements coincide in order to define a common image-output face. It will be appreciated that the rigidity of the individual branch elements renders the imaging bundle self-supporting, thereby obviating the need for an "exoskeletal" framework for supporting the individual branch elements to keep them aligned as desired.

When the second portions of the branch elements are mutually bound as described above, the first portions of the branch elements are mutually divergent. Additionally, in various versions, the image-input faces are disparately directed. For example, in a non-limiting illustrative instance in which the image-input face of each of the first and second branch elements is planar and oriented orthogonally to the first image-propagation axis of that branch element, it will be readily appreciated that the image-input faces of the first and second branch elements are disparately directed. However, as implied by the non-limiting nature of the aforementioned example, it is to be expressly understood that versions with alternatively configured and directed image-input faces are within the scope and contemplation of the invention. More specifically, by way of additional non-limiting example, within the scope and contemplation of the invention are versions in which a planar image-input face is not oriented orthogonally to a corresponding first image-propagation axis. Additionally, in the absence of express claim language to the contrary, versions with non-planar image-input faces are also regarded as within the scope of the invention as defined in the appended claims.

Aspects of illustrative multi-directional imaging bundles having been described, an illustrative multi-directional imaging assembly further includes an optical focusing element mechanically retained in optical alignment with the image-input face of each branch element. In a typical version, each focusing element is a lens. However, absent explicit limitations to the contrary, it is to be understood that within the scope and contemplation of the invention as defined in the appended claims are versions having alternative focusing optics such as, by way of non-limiting example, mirrors or graded refractive index elements. Each focusing element defines a field of view correlating to a three-dimensional region of space external to the imaging assembly. An image of the spatial region correlating to the field of view defined by a focusing element is acquired and projected by that focusing element onto the image-input face with which that focusing element is optically aligned.

The images acquired and projected by each focusing element are conducted by internal refection through the branch element with which that focusing element corresponds. Accordingly, in various versions, each image-conducting branch element comprises a plurality of adjacently fused, internally-reflecting imaging conduits, such as optical fibers. The heating, drawing and adjacent fusing of bundled optical fibers, or optical fiber canes, to form rigid, image-conducting bundles is a well-established art and, therefore, warrants no detailed explanation herein. A straight bundled formed by such a process would be bent before it cools or, if cooled, subsequently heated and bent to form an image-conducting branch element including at least one bend.

The field of view defined by each focusing element is unique relative to the field of view defined by each of the other focusing elements associated with the imaging assembly. However, in order to render possible the "piecing together" of plural images acquired by plural focusing elements, and create a composite image representing a single, continuous region of space, each of various embodiments is configured such that the field of view defined by each focusing element partially overlaps the field of view defined by at least one other focusing element associated with the imaging assembly. For example, a left-side focusing element might include within the right side of its field of view some of the same portions of space included within the left side of the field of view of a right-side focusing element. The left and right side images could then be combined, and the redundancy between them "subtracted out" out of a combined image by, for example, algorithmically-based image enhancement techniques. The goal of the image enhancement is to create, in a "combined" or "compound" image, the illusion of a single panoramic image acquired over a larger field of view than any of the focusing elements is individually capable of yielding.

Situated in optical alignment with the common image-output face of the imaging bundle is an image detector array to which images conducted through the branch elements and outputted through the common image-output face are optically communicated. The image detector array used in any particular version may be a (i) microbolometer, (ii) a charge-coupled device (CCD), a (iii) complimentary metal-oxide semiconductor (CMOS) circuit or (iv) one or more photodiodes, by way of non-limiting example. An array of at least 1x1 photodiodes might be used as the detector array in an embodiment configured for general light detection. Accordingly, in at least one such embodiment, focusing elements are omitted at the image-input faces since "focused" images might be unnecessary for such purposes. In any event, in an illustrative version in which a detector array of any type is included, the detector array is communicatively linked to a data processing system including a central processor, memory for storing data indicative of images registered by the detector array (alternatively, "registered-image data") and a signal processing algorithm for processing the electrical outputs of the detector array.

Registered-image data representative of multiple (at least two) images registered simultaneously at the detector array is stored in computer memory. It will be appreciated that, by virtue of the overlapping fields of view aforementioned, that some of the registered-image data associated with at least one image will be duplicative of some of the registered-image data associated with at least one other image. Accordingly, in at least some implementations, a signal-processing algorithm analyzes the registered-image data corresponding to contemporaneously acquired images and algorithmically assembles a single composite image in which image-data redundancy is eliminated.

Representative, non-limiting embodiments are more completely described and depicted in the following detailed description and the accompanying drawings.

### Brief description of the drawings

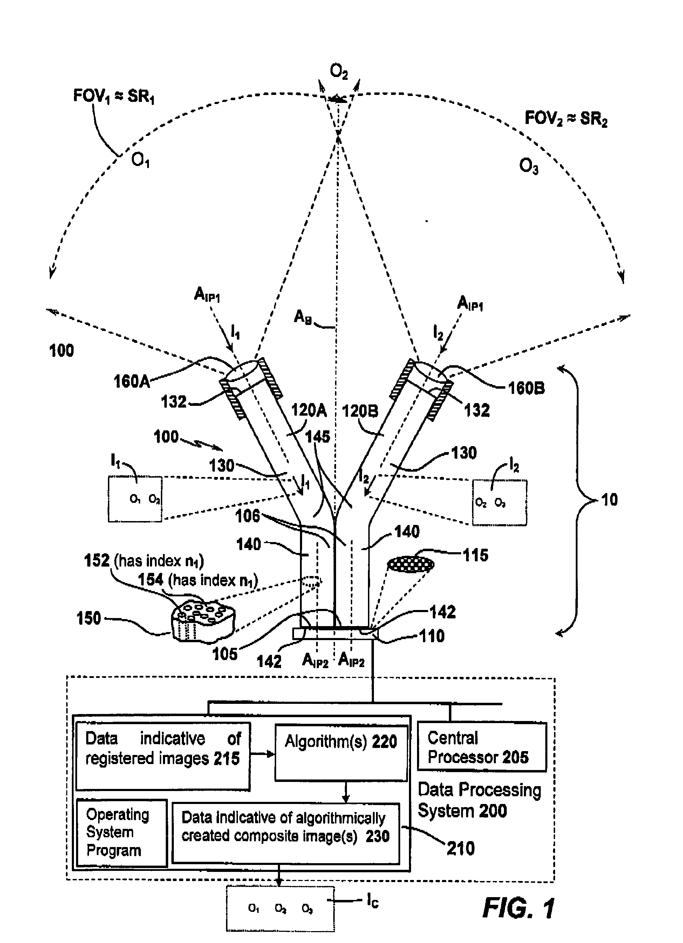

FIG. 1 depicts a multi-directional imaging assembly including a multi-directional imaging bundle.

### Detailed description

The following description of various rigid multi-directional imaging bundles and variously embodied multi-directional imaging assemblies incorporating multi-directional imaging bundles is illustrative in nature and is therefore not intended to limit the invention or its application of uses. The various implementations, aspects, versions and embodiments described in the summary and detailed description are in the nature of non-limiting examples falling within the scope of the appended claims and do not serve to constrain the maximum scope of the claims.

Referring to FIG. 1, an illustrative multi-directional imaging assembly **10** includes a multi-directional imaging bundle **100** that simultaneously receives disparate first and second images of correspondingly disparate regions of space external to the multi-directional imaging assembly **10.** The imaging bundle **100** -- which is described in more detail later in the present description -- internally conducts the images for output through a common image-output face **105** defined at one end of the imaging bundle **100.**

Images outputted through the common image-output face **105** are optically communicated to an image detector array **110.** In the version depicted, the common image-output face **105** and image detector array **110** are mutually coupled "directly" such that no intervening optics are required. However, it is to be understood, absent express limitations to the contrary, versions in which at least one optical element (not shown) is present between the image-output face **105** and the image detector array **110** are within the scope and contemplation of the invention as defined in the appended claims.

Alternative implementations incorporate any of a variety of conventional detector arrays **110** configured to detect wavelengths over a predetermined range of electromagnetic wavelengths. A typical detector array **110** suitable for implementing embodiments of the invention includes photosensitive detector elements **115** that are, to the extent practicable, uniformly sized and regularly spaced. As mentioned in the summary, three illustrative types of detector arrays **110** that may be incorporated into various alternative embodiments are (i) microbolometers (ii) charge-coupled devices (CCD) and (iii) complimentary metal-oxide semiconductor (CMOS) circuits. The detector array **110** is communicatively linked to a data processing system **200** including a central processor 205, memory **210** for storing data indicative of registered images **215** (alternatively, "registered-image data **215**"), and a signal processing algorithm **220** for processing the electrical outputs of the detector array **110** and the registered-image data **215.**

In the illustrative version of FIG. 1, the multi-directional imaging bundle **100** includes first and second image-conducting branch elements **120A** and **120B.** Hereinafter, only when one branch element **120** need be distinguished from the other are the alphabetic characters **"A"** and **"B"** included. Correlatively, like elements of the first and second branch elements **120A** and **120B** are referenced by like numerical reference characters. Each branch element **120** has an image-conducting first portion **130** with an image-input face **132** and an image-conducting second portion **140** with an image-output face **142** opposite the image-input face **132.** Moreover, each branch element **120** is rigid over its entire length between the opposed image-input and image-output faces **132** and **142** and, furthermore, includes at least one bend **145** between the first and second portions **130** and **140** such that the first and second portions **130** and **140** extend along, respectively, a first image-propagation axis **A_{IP1},** and second image-propagation axis **A_{IP2}** that is non-parallel to the first image-propagation axis **A_{IP1}.**

Referring still to FIG. 1, the second portions **140** of the first and second branch elements **120A** and **120B** are mutually bound so as to a define a bundle trunk **106** and permanently fix the positions and angular orientations of the branch elements **120** relative to one another. The constituent second portions **140** of the bundle trunk **106** extend along, but not necessarily parallel to, a common bundle axis **A_{B}.** Furthermore, the image-output faces **142** of the branch elements **120** coincide in order to define the aforementioned common image-output face **105.**

With the second portions **140** of the branch elements **120** mutually bound, the first portions **130** of the branch elements **120** are mutually divergent relative to the second portions **140** and the bundle trunk **106** defined thereby. More specifically, while the second portions **140** might not, in any particular version, be parallel to one another, and to the common bundle axis **A_{B},** the second portions **140** of the first and second branch elements **120A** and **120B** are closer to mutually parallel than are the first portions **130** of the first and second branch elements **120A** and **120B.** Additionally, in various versions, the image-input faces **132** of the first and second branch elements **120A** and **120B** are disparately directed. For instance, in the particular, non-limiting version of FIG. 1, the image-input face **132** of each of the first and second branch elements **120A** and **120B** is planar and oriented orthogonally to the first image-propagation axis **A_{IP1}** of that branch element **120.** Accordingly, by virtue of the fact that the first image-propagation axes **A_{IP1}** of the branch elements **120** are mutually divergent, the image-input faces **132** of the first and second branch elements **120A** and **120B** are disparately directed.

Mechanically retained in optical alignment with the image-input faces **132** of the first and second branch elements **120A** and **120B** are, respectively, first and second focusing elements **160A** and **160B.** As with the first and second branch elements **120A** and **120B,** when one focusing element **160** need be distinguished from the other, the alphabetic characters **"A"** and **"B"** included. As schematically depicted in FIG. 1, the first and second focusing elements **160A** and 160B define, respectively, first and second fields of view **FOV₁** and **FOV_{2,}** The first and second fields of view **FOV₁** and **FOV₂** correlate to, respectively, three-dimensional first and second spatial regions **SR₁** and **SR₂** external to the imaging assembly **10.**

At a given instant, a first image **I₁** of the first spatial region **SR₁** is acquired and projected by the first focusing element **160A** onto the image-input face **132** of the first branch element **120A.** Contemporaneously with the acquisition and projection of the first image **I₁,** a second image **I₂** of the second spatial region **SR₂** is acquired and projected by the second focusing element **160B** onto the image-input face **132** of the second branch element **120B.** Subsequent to their impingement upon the image-input faces 132 of the first and second branch elements **120A** and **120B,** the first and second images **I₁** and **I₂** are conducted by internal reflection through, respectively, the first and second branch elements **120A** and **120B** and optically communicated to the detector elements **115** of the detector array **110** through the common image-output face **105.**

Although the internally-reflecting branch elements **120** may be alternatively configured, each of the branch elements **120** of FIG. 1 comprises a plurality of adjacently fused, internally-reflecting imaging conduits **150,** such as optical fibers. As shown in the enlarged branch section of FIG. 1, each imaging conduit **150** includes an optically transmissive core **152** having an imaging-core refractive index **n₁** surrounded by a cladding material **154** with an imaging-cladding refractive index **n₂** lower than the imaging-core refractive index **n₁** such that light propagates through the imaging conduit **150** by internal reflection. In a typical embodiment in which the imaging conduits **150** are adjacently fused, the cores **152** are supported within a matrix of fused cladding material **154.**

By virtue of the disparate directing of the focusing optics, the field of view defined by the first focusing element **160A** differs from the field of view defined by the second focusing element **160B.** That is to say, the first and second focusing elements **160A** and **160B** acquire and project images of disparate first and second spatial regions **SR₁** and **SR₂** such that a first image **I₁** acquired and projected by the first focusing element **160A** differs from a second image **I₂** simultaneously acquired and projected by the second focusing element **160B.** However, the first and second focusing elements **160A** and **160B** are configured and directed such that the first field of view **FOV₁** partially overlaps the second field of view **FOV₂.** This overlap is represented in FIG. 1 with reference to first, second and third objects **O₁, O₂** and O₃ and illustrative images **I₁** and **I₂.** More specifically, the first object **O₁** is depicted as being approximately "on-axis" with the first image-propagation axis **A_{IP1}** of the first branch element **120A,** while the second object O₂, which is depicted as on-axis with the common bundle axis **A_{B},** appears to the far right in image **I₁.** Distinguishably, the third object O₃ is depicted as being approximately "on-axis" with the first image-propagation axis **A_{IP1},** of the second branch element **120B,** while the aforementioned second object **O₂** appears to the far left in image **I₂.** Accordingly, in this example, the object **O₂** resides in the "overlap region" of the first and second fields of view **FOV₁** and **POV₂** imaged by the overall imaging assembly **10.**

Registered-image data **215** representative of first and second images **I₁** and **I₂** registered simultaneously at the detector array **110** is stored in computer memory **210.** It will be appreciated that, because some of the "object content" of the first image **I₁** is the same as some of the object content of the second image **I₂** acquired contemporaneously, there will exist some redundancy in the registered-image data **215** indicative of the first and second image **I₁** and **I₂.** Accordingly, in at least some implementations, a signal-processing algorithm **220** analyzes the registered-image data **215** corresponding to the first and second images **I₁** and **I₂** in order to algorithmically construct (or assemble) a composite image **Ic** in which image-data redundancy is eliminated. At the bottom of FIG. 1 is a graphical representation of composite-image data **230** representative of a composite image **I_{c}** formed by non-redundant portions of the registered-image data **215** corresponding to the first and second images **I₁** and **I₂.**

Although the illustrative embodiment of FIG. 1 exemplifies a version having two image-conducting branch elements **120,** it is to be understood that this version in no way limits the intended scope of the invention. More specifically, versions having more than two branch elements **120** that can simultaneously image several overlapping spatial regions are envisioned. For example, a version that can image 360° of horizon, and the entirety of the sky above the horizon, is contemplated.

The foregoing is considered to be illustrative of the principles of the invention. Furthermore, since modifications and changes to various aspects and implementations will occur to those skilled in the art without departing from the scope and spirit of the invention, it is to be understood that the foregoing does not limit the invention as expressed in the appended claims to the exact constructions, implementations and versions shown and described.

## Claims

1. A rigid multi-directional imaging bundle comprising:
- a bundle trunk that extends along a common bundle axis and includes a common image-output face; and
- at least first and second image-conducting branch elements, each branch element having an image-conducting first portion with an image-input face and an image-conducting second portion with an image-output face opposite the image-input face; wherein
(a) each branch element (i) is rigid over the entire length thereof between the image-input and image-output faces and (ii) includes at least one bend between the first and second portions; and
(b) the second portions of the branch elements are mutually bound such that (i) the second portions of the branch elements define the bundle trunk and extend along the common bundle axis, (ii) the image-output faces of the branch elements coincide with the common image-output face, (iii) the first portions of the branch elements are mutually divergent, and (iv) the image-input faces of the first and second branch elements are disparately directed and configured in order to contemporaneously receive disparate first and second images of space external to the imaging bundle.

2. The imaging bundle of claim 1 wherein each image-conducting branch element comprises a plurality of adjacently fused, internally-reflecting imaging conduits.

3. The imaging bundle of claim 2 further comprising a focusing element optically aligned with the image-input face of each branch element, wherein (i) each focusing element defines a field of view correlating to a spatial region an image of which is projected, by the focusing element, onto the image-input face with which that focusing element is optically aligned and (ii) the field of view defined by each focusing element is unique relative to the field of view defined by each of the other focusing elements.

4. The imaging bundle of claim 3 wherein the field of view defined by each focusing element partially overlaps the field of view defined by at least one other focusing element associated with the imaging bundle.

5. A multi-directional imaging assembly comprising:
- at least first and second image-conducting branch elements, each branch element having an image-conducting first portion with an image-input face and an image-conducting second portion with an image-output face opposite the image-input face, each branch element being rigid and including at least one bend between the image-input and image-output faces;
- a focusing element optically aligned with the image-input face of each branch element, each focusing element defining a field of view correlating to a spatial region, an image of which spatial region is projected, by the focusing element, onto the image-input face with which that focusing element is optically aligned, and the field of view defined by each focusing element being unique relative to the field of view defined by each of the other focusing elements; wherein
- the second portions of the branch elements are mutually bound such that (i) the second portions of the branch elements define a bundle trunk that extends along a common bundle axis, (ii) the image-output faces of the branch elements coincide in order to define a common image-output face, (iii) the first portions of the branch elements are mutually divergent, and (iv) the image-input faces of the first and second branch elements are disparately directed.

6. The imaging assembly of claim 5 further comprising an image detector array situated in optical alignment with the common image-output face such that images conducted through the branch elements, and outputted through the common image-output face, are optically communicated to the image detector array.

7. The imaging assembly of claim 6 wherein each image-conducting branch element comprises a plurality of adjacently fused, internally-reflecting imaging conduits.

8. The imaging assembly of claim 5 wherein each image-conducting branch element comprises a plurality of adjacently fused, internally-reflecting imaging conduits.

9. The imaging assembly of claim 8 wherein the field of view defined by each focusing element partially overlaps the field of view defined by at least one other focusing element associated with the imaging bundle.

10. The imaging assembly of claim 9 further comprising an image detector array situated in optical alignment with the common image-output face such that images conducted through the branch elements, and outputted through the common image-output face, are optically communicated to the image detector array.

11. The imaging assembly of claim 5 wherein the field of view defined by each focusing element partially overlaps the field of view defined by at least one other focusing element associated with the imaging bundle.

12. The imaging assembly of claim 11 further comprising an image detector array situated in optical alignment with the common image-output face such that images conducted through the branch elements, and outputted through the common image-output face, are optically communicated to the image detector array.

13. A multi-directional imaging assembly comprising:
- at least first and second rigid image-conducting branch elements, each branch element including
(i) an image-conducting first portion with an image-input face, (ii) an image-conducting second portion with an image-output face opposite the image-input face and (iii) at least one bend between the image-input and image-output faces; and
- an image detector array; wherein
(i) the second portions of the branch elements are mutually bound such that the image-output faces of the branch elements coincide in order to define a common image-output face;
(ii) the first portions of the branch elements are mutually divergent; and
(iii) the image detector array is situated in optical alignment with the common image-output face such that images conducted through the branch elements, and outputted through the common image-output face, are optically communicated to the image detector array.

14. The imaging assembly of claim 13 further comprising a focusing element optically aligned with the image-input face of each branch element, each focusing element defining a field of view correlating to a spatial region, an image of which spatial region is projected, by the focusing element, onto the image-input face with which that focusing element is optically aligned, and the field of view defined by each focusing element being unique relative to the field of view defined by each of the other focusing elements.

15. The imaging assembly of claim 14 wherein the field of view defined by each focusing element partially overlaps the field of view defined by at least one other focusing element associated with the imaging bundle.
